# FASCICULE DE BREVET EUROPEEN

(11) **EP 3 183 111 B1**
(45) Date de publication et mention de la délivrance du brevet: **15.12.2021**
(21) Numéro de dépôt: 15760216.0
(22) Date de dépôt: 17.08.2015
(51) Int. Cl.: B29C 70/22, B29C 70/24, B29C 70/68, F01D 21/04, F01D 25/24, B29L 31/00

(54) **CARTER EN MATERIAU COMPOSITE A MATRICE ORGANIQUE ET SON PROCEDE DE FABRICATION**
GEHÄUSE AUS EINEM VERBUNDMATERIAL MIT EINER SELBST-VERSTEIFTEN ORGANISCHEN MATRIX UND VERFAHREN ZUR HERSTELLUNG DES SELBEN.
CASING CONSISTING OF A COMPOSITE MATERIAL WITH A SELF-STIFFENED ORGANIC MATRIX AND METHOD OF PRODUCING THE SAME

(30) Priorité: 22.08.2014 US 201462040680 P; 14.01.2015 FR 1550278
(43) Date de publication de la demande: 28.06.2017
(73) Titulaire: SAFRAN AIRCRAFT ENGINES, 75015 Paris (FR)
(72) Inventeur: MARIN, Sébastien, F-77550 Moissy-Cramayel Cedex (FR); LOMBART, Quentin Damien, F-77550 Moissy-Cramayel Cedex (FR)
(74) Mandataire: Cabinet Beau de Loménie
(86) Numéro de dépôt international: PCT/FR2015/052213
(87) Numéro de publication internationale: WO 2016/027030

(56) Documents cités:
- EP-A2- 2 290 197
- WO-A1-99/61757
- WO-A1-2013/114051
- WO-A1-2013/114051
- WO-A2-2013/007937
- FR-A1- 2 975 735
- US-A- 4 600 619
- US-A1- 2013 048 414

## Description

### Arrière-plan de l'invention

L'invention concerne les carters de turbine à gaz, et plus particulièrement, mais non exclusivement, les carters de soufflante de turbine à gaz pour moteurs aéronautiques.

Dans un moteur aéronautique à turbine à gaz, le carter de soufflante remplit plusieurs fonctions. Il définit notamment la veine d'entrée d'air dans le moteur, supporte éventuellement un matériau abradable en regard des sommets d'aubes de la soufflante et/ou une structure d'absorption d'ondes sonores pour le traitement acoustique en entrée du moteur et incorpore ou supporte un bouclier de rétention.

Précédemment réalisés en matériau métallique, les carters, comme le carter de soufflante, sont maintenant réalisés en matériau composite, c'est-à-dire à partir d'une préforme fibreuse densifiée par une matrice organique, ce qui permet de réaliser des pièces ayant une masse globale moins élevée que ces mêmes pièces lorsqu'elles sont réalisées en matériau métallique tout en présentant une résistance mécanique au moins équivalente sinon supérieure. La fabrication d'un carter de soufflante en matériau composite à matrice organique est notamment décrite dans le document US 8 322 971. Le document WO 2013/114041 divulgue le préambule des revendications 1 et 6.

Si l'utilisation de carters en matériau composite permet de réduire la masse globale du moteur, cette réduction de masse conduit à une diminution des fréquences propres du carter qui peut se traduire par un croisement avec les sillages des aubes de la soufflante, le carter entrant alors en résonance lorsqu'une de ses fréquences propres croise une harmonique d'excitation produite par le sillage des aubes. Dans ce cas, un raidissement du carter en matériau composite est nécessaire.

### Objet et résumé de l'invention

L'invention a pour but de proposer un carter de turbine à gaz en matériau composite présentant une raideur accrue, et ce sans augmenter de manière significative l'encombrement et la masse du carter.

Ce but est atteint grâce à un carter de turbine à gaz en matériau composite comprenant un renfort densifié par une matrice selon la revendication 1.

En formant au moins un décrochement dans le profil du carter qui ne suit pas le profil de veine aérodynamique habituellement défini sur toute la surface interne du carter, le carter selon l'invention présente localement une géométrie particulière qui permet son auto-raidissement. Le carter selon l'invention présente, par conséquent, une raideur accrue, et ce sans ajout d'éléments supplémentaires, tels que des raidisseurs dédiés rapportés sur le carter en matériau composite, qui complexifient la fabrication du carter et augmentent sa masse globale.

Selon un aspect du carter de l'invention, chaque portion de raidissement présente en coupe axiale une forme de type oméga.

Selon un autre aspect du carter de l'invention, celui-ci comporte une zone de rétention présentant une épaisseur plus importante que le reste du carter, la ou lesdites portions de raidissement étant situées en dehors de la zone de rétention.

L'invention a également pour objet un moteur aéronautique à turbine à gaz ayant un carter de rétention de soufflante selon l'invention ainsi qu'un aéronef comprenant un ou plusieurs de ces moteurs aéronautiques.

L'invention a encore pour objet un procédé de fabrication d'un carter en matériau composite pour une turbine à gaz, conformément à la revendication 6.

Selon un aspect du procédé de l'invention, chaque portion de raidissement présente en coupe axiale une forme de type oméga.

Selon un autre aspect du procédé de l'invention, la préforme fibreuse comporte une zone d'épaisseur plus importante que le reste de la préforme fibreuse qui est destinée à former une zone de rétention dans le carter, la ou lesdites partie de décrochement étant situées en dehors de la partie d'épaisseur plus importante.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue en perspective d'un moteur aéronautique conformément à un mode de réalisation de l'invention,
- la figure 2 est une demi-vue vue en coupe axiale du carter de soufflante du moteur de la figure 1,
- la figure 3 est une demi-vue en coupe axiale d'un carter de soufflante conformément à un autre mode de réalisation de l'invention,
- la figure 4 est une vue en perspective montrant la mise en forme d'une texture fibreuse destinée à former le renfort du carter de soufflante de la figure 2,
- la figure 5 est une demi-vue en coupe axiale d'une préforme du carter de la figure 2 obtenue par enroulement de la texture fibreuse comme montré sur la figure 4,
- la figure 6 est une vue en coupe montrant le positionnement de secteurs d'injection sur la préforme du carter de la figure 2 obtenue par enroulement de la texture fibreuse comme montré sur la figure 4.

### Description détaillée de modes de réalisation

L'invention s'applique d'une manière générale à tout carter en matériau composite à matrice organique de turbine à gaz.

L'invention sera décrite ci-après dans le cadre de son application à un carter de soufflante de moteur aéronautique à turbine à gaz.

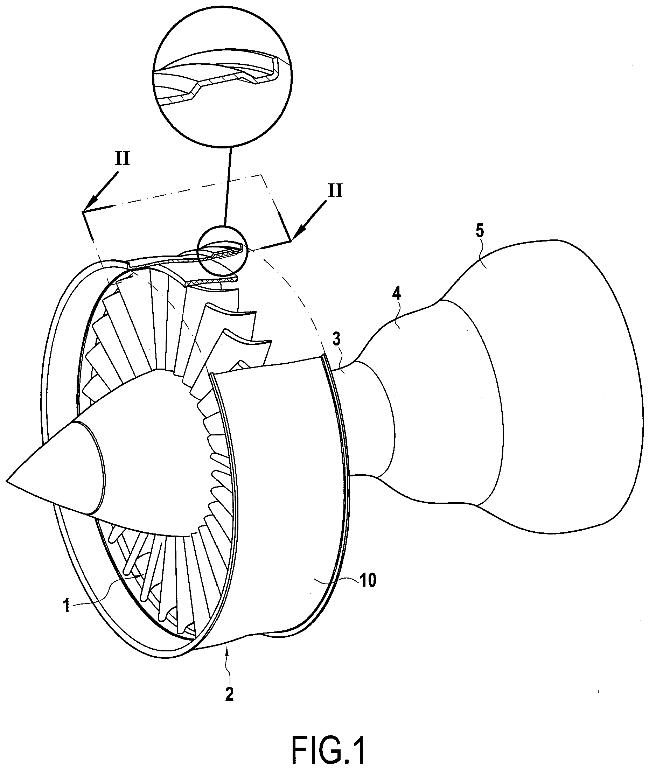

Un tel moteur, comme montré très schématiquement par la figure 1 comprend, de l'amont vers l'aval dans le sens de l'écoulement de flux gazeux, une soufflante 1 disposée en entrée du moteur, un compresseur 2, une chambre de combustion 3, une turbine haute-pression 4 et une turbine basse pression 5.

Le moteur est logé à l'intérieur d'un carter comprenant plusieurs parties correspondant à différents éléments du moteur. Ainsi, la soufflante 1 est entourée par un carter de soufflante 10 présentant une forme de révolution.

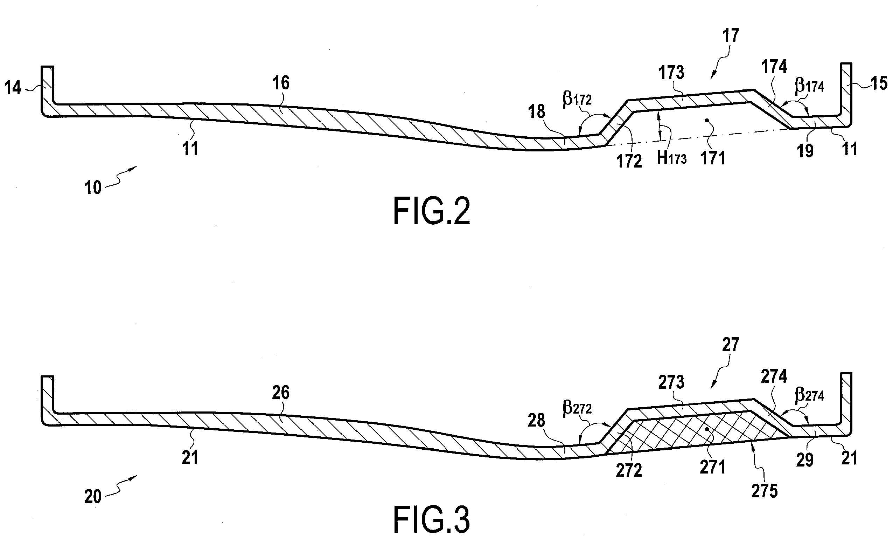

La figure 2 montre le profil (en coupe axiale) du carter de soufflante 10 qui est ici réalisé en matériau composite à matrice organique, c'est-à-dire à partir d'un renfort en fibres par exemple de carbone, verre, aramide ou céramique, densifié par une matrice en polymère, par exemple époxide, bismaléimide ou polyimide. La fabrication d'un carter en matériau composite est notamment décrite dans le document US 8 322 971. La surface interne 11 du carter définit la veine d'entrée d'air du moteur.

Le carter 10 peut être muni de brides externes 14, 15 à ses extrémités amont et aval afin de permettre son montage et sa liaison avec d'autres éléments. Entre ses extrémités amont et aval, le carter 10 présente une épaisseur variable, une partie 16 du carter ayant une plus forte épaisseur que les parties d'extrémité en se raccordant progressivement à celle-ci. La partie 16 s'étend de part et d'autre de l'emplacement de la soufflante, vers l'amont et l'aval, afin de former une zone de rétention capable de retenir des débris, particules ou objets ingérés en entrée du moteur, ou provenant de l'endommagement d'aubes de la soufflante, et projetés radialement par rotation de la soufflante, pour éviter qu'ils traversent le carter et endommagent d'autres parties de l'aéronef.

Conformément à l'invention, le carter 10 comprend en outre une portion de raidissement 17 s'étendant suivant un rayon supérieur au rayon des portions amont 18 et aval 19 du carter qui sont adjacentes à la portion de raidissement 17 de manière à former un creux annulaire 171 sur la surface interne 11 du carter 10. Plus précisément, la portion de raidissement 17 est formée par un plateau annulaire 173 décalé radialement vers l'extérieur du carter par rapport à la surface interne 11 de celui-ci. Le plateau annulaire 173 est relié aux portions amont 18 et aval 19 qui définissent une partie de la surface interne 11 du carter respectivement par des montants annulaires 172 et 174. Les angles β₁₇₂ et β₁₇₄ formés respectivement entre les montants 172 et 174 et les portions amont 18 et aval 19 sont de préférence supérieurs à 90° et inférieurs à 180°. Ces angles sont notamment définis en fonction de la raideur que l'on souhaite conférer au carter et des possibilités de fabrication.

La hauteur H₁₇₃ du plateau, correspondant au décalage radial de celui-ci par rapport à la surface interne 11 du carter dépend également de la raideur que l'on souhaite apporter au carter tout en tenant compte des contraintes d'encombrement du carter pour l'intégration dans l'environnement moteur.

Dans le mode de réalisation décrit ici, le plateau 173 et les montants 172 et 174 présentent des profils (en coupe axiale) rectilignes. Toutefois, suivant des variantes de réalisation, ces éléments peuvent également présenter des profils légèrement courbés ou ondulés.

Dans le mode réalisation décrit ici, la portion de raidissement 17 présente une forme de type oméga qui est une forme bien adaptée pour le raidissement.

La figure 3 illustre un carter 20 conforme à l'invention qui diffère du carter 10 déjà décrit en ce que le creux annulaire 271, formé par le plateau et les montants annulaires 273, 272 et 274 définissant une portion de raidissement 27, est comblée par un matériau ou structure de remplissage correspondant ici à une structure alvéolaire 275 permettant de réaliser une atténuation acoustique.

Le comblement du creux annulaire 271 formé par la portion de raidissement 27 permet d'assurer une continuité de la surface interne 21 entre les portions amont 28 et aval 29 et, par conséquent, de ne pas modifier la veine définie par ladite surface interne du carter. Le comblement peut être réalisé avec tout type de matériau ou de structure adaptés et en particulier un matériau (ex. mousse) ou une structure (alvéolaire) permettant de réaliser un traitement d'atténuation acoustique. Outre la raideur visée, la hauteur du plateau de la portion de raidissement peut être également définie en fonction de la hauteur optimale pour un traitement acoustique.

Le carter selon l'invention peut comporter plusieurs portions de raidissement similaires aux portions de raidissement 17 et 27 décrites précédemment. Toutefois, la ou les portions de raidissement sont de préférence situées en dehors de la zone de rétention formée par la partie de surépaisseur correspondant aux parties 16 et 26 respectivement des carters 10 et 20 déjà décrits.

On décrit maintenant un procédé de fabrication du carter 10 en matériau composite à renfort fibreux densifié par une matrice.

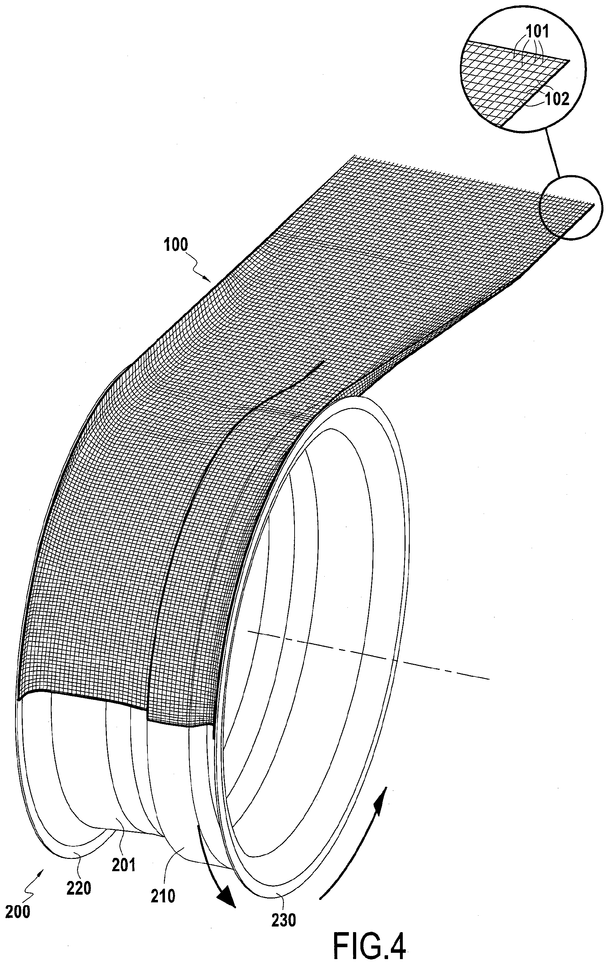

La réalisation du carter débute par la formation d'une texture fibreuse sous forme d'une bande. La figure 4 montre très schématiquement une structure fibreuse 100 tissée sous forme d'une bande destinée à former une préforme fibreuse d'un carter de moteur d'avion.

La structure fibreuse 100 est obtenue par tissage tridimensionnel ou multicouche réalisé de façon connue au moyen d'un métier à tisser de type jacquard sur lequel on a disposé un faisceau de fils de chaînes 101 ou torons en une pluralité de couches, les fils de chaînes étant liés par des fils de trame 102.

Dans l'exemple illustré, le tissage tridimensionnel est un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

D'autres types de tissage multicouche connus pourront être utilisés, comme notamment ceux décrits dans le document WO 2006/136755.

La structure fibreuse peut être notamment tissée à partir de fils de fibres de carbone, de céramique telle que du carbure de silicium, de verre, ou encore d'aramide.

Comme illustré sur la figure 4, le renfort fibreux est formé par enroulement sur un mandrin 200 de la texture fibreuse 100 réalisée par tissage tridimensionnel avec épaisseur évolutive, le mandrin ayant un profil correspondant à celui du carter à réaliser. Avantageusement, le renfort fibreux constitue une préforme fibreuse tubulaire complète du carter 10 formant une seule pièce avec un raidisseur correspondant à la portion de raidissement 17.

A cet effet, le mandrin 200 présente une surface externe 201 dont le profil correspond à la surface interne du carter à réaliser. Par son enroulement sur le mandrin 200, la texture fibreuse 100 épouse le profil de celui-ci. Le mandrin 200 comporte sur sa surface externe 201 un bossage annulaire 210 dont la forme et les dimensions correspondent à celle de la portion de raidissement 17 à former. Le mandrin 200 comporte également deux flasques 220 et 230 pour former des parties de préforme fibreuse correspondant aux brides 14 et 15 du carter 10.

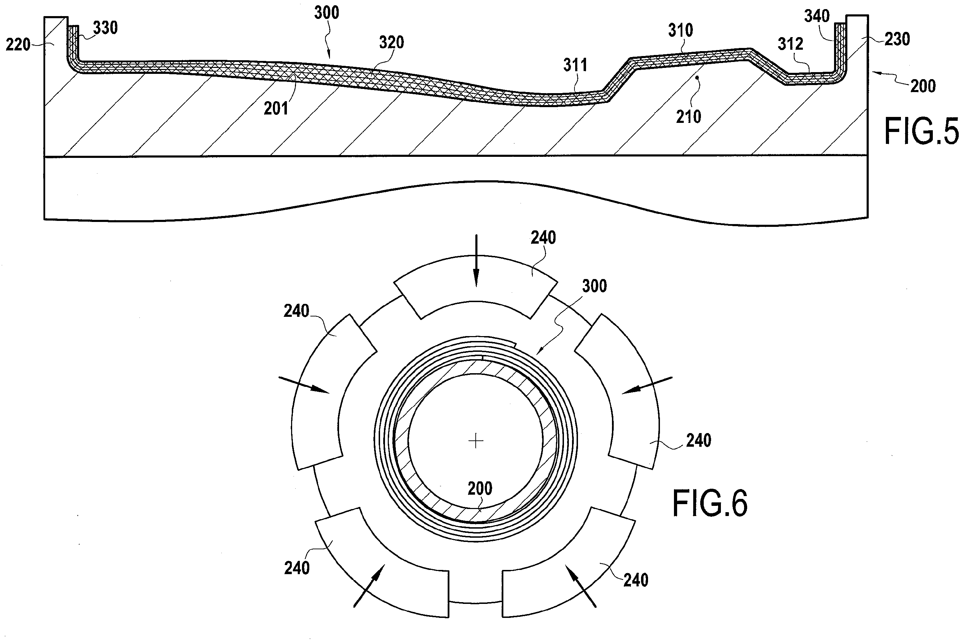

La figure 5 montre une vue en coupe de la préforme fibreuse 300 obtenue après enroulement de la texture fibreuse 100 en plusieurs couches sur le mandrin 200. Le nombre de couches ou spires est fonction de l'épaisseur désirée et de l'épaisseur de la texture fibreuse. Il est de préférence au moins égal à 2. Dans l'exemple décrit ici, la préforme 300 comprend 4 couches de texture fibreuse 100.

On obtient une préforme fibreuse 300 avec une partie de décrochement 310 s'étendant suivant un rayon supérieur au rayon des parties amont et aval 311 et 312 de la préforme situées de chaque côté de la partie de décrochement. La partie de décrochement 310 correspond à la portion de raidissement 17 du carter 10. La préforme fibreuse comprend également une partie 320 de plus forte épaisseur, correspondant à la partie 16 (zone de rétention) du carter et des parties d'extrémité 330, 340 correspondant aux brides 14, 15 du carter.

On procède ensuite à la densification de la préforme fibreuse 300 par une matrice.

La densification de la préforme fibreuse consiste à combler la porosité de la préforme, dans tout ou partie du volume de celle-ci, par le matériau constitutif de la matrice.

La matrice peut être obtenue de façon connue en soi suivant le procédé par voie liquide.

Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme fibreuse est placée dans un moule pouvant être fermé de manière étanche avec un logement ayant la forme de la pièce finale moulée. Comme illustré sur la figure 6, la préforme fibreuse 300 est ici placée entre une pluralité de secteurs 240 formant contre-moule et le mandrin 200 formant support, ces éléments présentant respectivement la forme extérieure et la forme intérieure du carter à réaliser. Ensuite, on injecte le précurseur liquide de matrice, par exemple une résine, dans tout le logement pour imprégner toute la partie fibreuse de la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser. La matrice organique peut être notamment obtenue à partir de résines époxydes, telle que, par exemple, la résine époxyde à hautes performances vendue, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

Selon un mode de réalisation, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme du carter à réaliser. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, la pièce est démoulée. Au final, la pièce est détourée pour enlever l'excès de résine et les chanfreins sont usinés pour obtenir le carter 10 illustré en figures 1 et 2.

## Revendications

1. Carter (10) de turbine à gaz en matériau composite comprenant un renfort densifié par une matrice, ledit carter présentant une forme de révolution et comprenant au moins une portion de raidissement (17) s'étendant suivant un rayon supérieur au rayon des portions amont et aval (18, 19) du carter adjacentes à ladite portion de raidissement (17) de manière à former un creux annulaire (171) sur la surface interne (11) du carter (10),
**caractérisé en ce que** le creux annulaire est vide ou est comblé avec un matériau ou une structure d'atténuation acoustique (275).

2. Carter selon la revendication 1, **caractérisé en ce que** chaque portion de raidissement (17) présente en coupe axiale une forme de type oméga.

3. Carter selon la revendication 1 ou 2, **caractérisé en ce qu'**il comporte une zone de rétention (16) présentant une épaisseur plus importante que le reste du carter (10), la ou lesdites portions de raidissement (17) étant situées en dehors de la zone de rétention (16).

4. Moteur aéronautique à turbine à gaz ayant un carter (10) de rétention de soufflante selon l'une quelconque des revendications 1 à 3.

5. Aéronef comprenant un ou plusieurs moteurs selon la revendication 4.

6. Procédé de fabrication d'un carter (10) en matériau composite pour une turbine à gaz, comprenant le tissage en une seule pièce par tissage tridimensionnel ou multicouche d'une texture fibreuse (100) en forme de bande, la mise en forme de ladite texture par enroulement sur un outillage de support (200) et la densification du renfort fibreux (300) par une matrice, lors de la mise en forme, la texture fibreuse (100) étant conformée de manière à obtenir une préforme fibreuse (300) comprenant au moins une partie de décrochement (310) s'étendant suivant un rayon supérieur au rayon des parties amont et aval (311, 312) de la préforme adjacentes à ladite partie de décrochement, ladite partie de décrochement formant un creux annulaire (171) sur la surface interne (11) du carter (10) après densification **caractérisé en ce que** le creux annulaire est vide ou est comblé avec un matériau ou une structure d'atténuation acoustique (275).

7. Procédé selon la revendication 6, **caractérisé en ce que** chaque portion de raidissement (17) présente en coupe axiale une forme de type oméga.

8. Procédé selon la revendication 6 ou 7, **caractérisé en ce que** la préforme fibreuse (300) comporte une zone d'épaisseur plus importante (320) que le reste de la préforme fibreuse destinée à former une zone de rétention (16) dans le carter (10), la ou lesdites parties de décrochement (310) étant situées en dehors de la partie d'épaisseur plus importante (320).

## Patentansprüche

1. Gasturbinengehäuse (10) aus Verbundmaterial, das eine durch eine Matrix verdichtete Verstärkung umfasst, wobei das Gehäuse eine Umlaufform aufweist und mindestens einen Versteifungsabschnitt (17) umfasst, der sich entlang eines Radius erstreckt, der größer ist als der Radius der stromauf- und stromabwärtigen Abschnitte (18, 19) des Gehäuses, die dem Versteifungsabschnitt (17) benachbart sind, derart dass ein ringförmiger Hohlraum (171) auf der Innenoberfläche (11) des Gehäuses (10) gebildet wird,
**dadurch gekennzeichnet, dass** der ringförmige Hohlraum leer oder mit einem Material oder einer Struktur zur Schalldämpfung (275) ausgefüllt ist.

2. Gehäuse nach Anspruch 1, **dadurch gekennzeichnet, dass** jeder Versteifungsabschnitt (17) einen axialen Schnitt mit einer Form vom Typ Omega aufweist.

3. Gehäuse nach Anspruch 1 oder 2, **dadurch gekennzeichnet, dass** es eine Rückhaltezone (16) umfasst, die eine Dicke aufweist, die größer als der Rest des Gehäuses (10) ist, wobei der oder die Versteifungsabschnitte (17) sich außerhalb der Rückhaltezone (16) befinden.

4. Luftfahrtmotor mit Gasturbine, die ein Verdichterrückhaltegehäuse (10) nach einem der Ansprüche 1 bis 3 umfasst.

5. Luftfahrzeug, das einen oder mehrere Motoren nach Anspruch 4 umfasst.

6. Verfahren zur Herstellung eines Gehäuses (10) aus Verbundmaterial für eine Gasturbine, das das einteilige Weben durch dreidimensionales oder mehrschichtiges Weben einer bandförmigen Fasertextur (100), das Formen der Textur durch Aufwickeln auf einem Tragwerkzeug (200) und die Verdichtung der Faserverstärkung (300) durch eine Matrix beim Formen umfasst, wobei die Fasertextur (100) derart angepasst ist, dass eine Faservorform (300) erhalten wird, die mindestens einen Absatzteil (310) umfasst, der sich entlang eines Radius erstreckt, der größer als der Radius der stromauf- und stromabwärtigen Teile (311, 312) der Vorform ist, die dem Absatzteil benachbart sind, wobei der Absatzteil nach Verdichtung einen ringförmigen Hohlraum (171) auf der Innenoberfläche (11) des Gehäuses (10) bildet, **dadurch gekennzeichnet, dass** der ringförmige Hohlraum leer ist oder mit einem Material oder einer Struktur zur Schalldämpfung (275) ausgefüllt ist.

7. Verfahren nach Anspruch 6, **dadurch gekennzeichnet, dass** jeder Versteifungsabschnitt (17) einen axialen Schnitt mit einer Form vom Typ Omega aufweist.

8. Verfahren nach Anspruch 6 oder 7, **dadurch gekennzeichnet, dass** die Faservorform (300) eine Zone (320) mit größerer Dicke als der Rest der Faservorform umfasst, die dazu bestimmt ist, eine Rückhaltezone (16) in dem Gehäuse (10) zu bilden, wobei der eine oder die mehreren Absatzteile (310) sich außerhalb des Teils (320) mit der größten Dicke befinden.

## Claims

1. A gas turbine casing (10) made of composite material comprising reinforcement densified by a matrix, said casing being in the form of a body of revolution and comprising at least one stiffener portion (17) extending at a radius greater than the radius of upstream and downstream portions (18, 19) of the casing that are adjacent to said stiffener portion (17) so as to form an annular recess (171) in the inside surface (11) of the casing (10), **characterized in that** the annular recess is empty or is filled in with an acoustic attenuation material or structure (275).

2. A casing according to claim 1, **characterized in that** each stiffener portion (17) presents, in axial section, an omega-type shape.

3. A casing according to claim 1 or 2, **characterized in that** it includes a retention zone (16) presenting thickness that is greater than the remainder of the casing (10), said stiffener portion(s) (17) being situated outside the retention zone (16).

4. A gas turbine aeroengine having a fan retention casing (10) according to any one of claims 1 to 3.

5. An aircraft including one or more engines according to claim 4.

6. A method of fabricating a gas turbine casing (10) out of composite material, the method comprising weaving a fiber texture (100) in the form of a single-piece strip by three-dimensional or multilayer weaving, shaping said texture by winding it on support tooling (200), and densifying the fiber reinforcement (300) with a matrix, during shaping, the fiber texture (100) being shaped so as to obtain a fiber preform (300) having at least one stepped portion (310) extending at a radius that is greater than the radius of upstream and downstream portions (311, 312) of the preform that are adjacent to said stepped portion, said stepped portion forming an annular recess (171) in the inside surface (11) of the casing (10) after densification, **characterized in that** the annular recess is empty or is filled in with an acoustic attenuation material or structure (275).

7. A method according to claim 6, **characterized in that** each stiffener portion (17) presents, in axial section, an omega-type shape.

8. A method according to claim 6 or 7, **characterized in that** the fiber preform (300) has a zone (320) of greater thickness than the remainder of the fiber preform so as to form a retention zone (16) in the casing (10), said stepped portion(s) (310) being situated outside the portion (320) of greater thickness.
